Europäisches Patentamt

European Patent Office

Office européen des brevets

(19)

(11) Numéro de publication: **0 055 663**
**B1**

# (12) FASCICULE DE BREVET EUROPEEN

(45) Date de publication du fascicule du brevet:
03.07.85

(21) Numéro de dépôt: **81402042.6**

(22) Date de dépôt: **21.12.81**

(51) Int. Cl.⁴: **B 60 Q 1/42**

(54) **Dispositif de contrôle automatique et sélectif d'un circuit électrique.**

(30) Priorité: **24.12.80 FR 8027532**

(43) Date de publication de la demande:
**07.07.82 Bulletin 82/27**

(45) Mention de la délivrance du brevet:
**03.07.85 Bulletin 85/27**

(84) Etats contractants désignés:
**DE GB IT SE**

(56) Documents cités:
**US - A - 3 201 536**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Nigon, Michel, 46, rue Faidherbe, F-78500 Sartrouville (FR)**

(74) Mandataire: **Weinstein, Zinovi et al, Cabinet Z. WEINSTEIN 20, Avenue de Friedland, F-75008 Paris (FR)**

## Description

La présente invention a essentiellement pour objet un dispositif de contrôle automatique et sélectif d'un circuit électrique.

Elle vise plus particulièrement un dispositif d'interruption automatique du circuit électrique d'indication du changement de direction d'un véhicule automobile.

On sait que le changement de direction d'un véhicule automobile peut être assuré par la mise sous tension d'un circuit électrique qui commande des lampes clignotantes à gauche ou à droite du véhicule. Cette mise sous tension du clignotant gauche ou droit peut être effectuée par appui sur un bouton situé par exemple à proximité du volant du véhicule et déclenchant l'émission d'impulsions électriques, ou encore tout simplement par rotation dans un sens ou dans l'autre d'un petit levier facilement accessible au conducteur tenant son volant.

Dans un cas comme dans l'autre, l'interruption du circuit électrique des clignotants se fait généralement automatiquement lorsque le conducteur, après avoir effectué un virage, ramène le volant à sa position neutre correspondant à une trajectoire en ligne droite du véhicule. C'est ainsi que dans le cas d'une commande de clignotant par levier, le rappel automatique du levier provoquant l'interruption du circuit électrique est assuré par un système mécanique à friction qui intervient lors du retour du volant à sa position neutre.

Toutefois, lorsqu'un conducteur désire effectuer un virage à droite par exemple, il agit sur la commande du clignotant pour mettre sous tension le circuit électrique de façon à permettre l'allumage du clignotant droit, mais avant d'effectuer le virage à droite, il doit, la plupart du temps, effectuer un contre-braquage, c'est-à-dire tourner légèrement le volant vers la gauche, afin de se dégager pour pouvoir négocier correctement le virage à droite en question. Or, bien souvent, ce contre-braquage correspondant à une faible rotation à gauche du volant est suffisant pour provoquer l'interruption automatique du clignotant droit, ce qui, comme on le comprend, n'est pas souhaitable, puisque le conducteur désirait au départ indiquer qu'il tournait à droite.

Ceci est fâcheux car, après avoir effectué le contre-braquage, le conducteur est obligé d'actionner une deuxième fois sa commande de clignotant après le contre-braquage, et, compte tenu de ce que le contre-braquage en question arrête le clignotant, l'avertissement du virage à droite est interrompu vis-à-vis des véhicules qui suivent, de sorte qu'à la limite, il peut en résulter des accidents de circulation.

On a deja remédié à ces inconvénients en proposant des systèmes évitant l'interruption inopinée du circuit de commande des clignotants lors d'une rotation du volant inverse de celle qu'il convient d'effectuer pour négocier un virage.

C'est ainsi que le brevet américain US-A-3 201 536 décrit un dispositif associé à la colonne de direction d'un véhicule et comprenant notamment une poignée permettant l'entraînement dans un sens ou dans l'autre d'un élément annulaire disposé concentriquement à la colonne de direction et pouvant actionner un interrupteur à contacts coulissants, ce dispositif étant apte à fournir un signal indicateur de la direction du véhicule sans que ce signal puisse être prématurément annulé par une rotation du volant inverse de celle correspondant à la direction en question.

Toutefois ce dispositif est d'une structure compliquée et se compose d'une multiplicité de petites pièces assemblées de sorte que sa fiabilité de fonctionnement peut être aléatoire. Aussi, la présente invention a pour but notamment de remédier à ces inconvénients en proposant un dispositif de conception mécanique très simple, n'utilisant qu'un nombre minimum de pièces, et permettant en outre de réduire l'encombrement des diverses commandes au même endroit à proximité du volant des véhicules.

Par rapport au brevet US précité qui décrit déjà un dispositif de contrôle automatique et sélectif d'un circuit électrique, et du type comprenant un organe de manœuvre pouvant entraîner dans un sens ou dans l'autre un élément susceptible de commander au moins une pièce apte à interrompre ou rétablir le courant passant dans ledit circuit, la présente invention est essentiellement caractérisée en ce que ledit élément est constitué par une came allongée montée à rotation libre en bout d'un axe directement fixé sur l'organe de manœuvre et formant un support pour deux butées fixes disposées de part et d'autre de ladite came pour en limiter la course de rotation à un angle inférieur à 90°, cette came pouvant agir positivement ou non sur deux pièces aptes à interrompre ou rétablir le courant et situées de chaque côté de la came sur sa trajectoire circulaire dans deux plans différents de part et d'autre de cette trajectoire.

Suivant une autre caractéristique de l'invention, l'axe portant la came pouvant agir sur les pièces est sensiblement perpendiculaire à l'axe de l'organe de manœuvre.

Selon un exemple de réalisation préféré, chaque pièce est constituée par un jeu de lames élastiques avec bossages.

Suivant un autre mode de réalisation, chaque pièce précitée est constituée par un élément fixe sur lequel peut s'accrocher l'une des deux branches d'un levier de mise sous tension du circuit électrique.

Selon encore une autre caractéristique, l'organe de manœuvre est par exemple la colonne de direction d'un véhicule tandis que les lames élastiques, ou bien le levier précités, sont associés à un circuit de commande des clignotants de ce véhicule.

On ajoutera encore ici que les deux lames ou les deux branches du levier sont disposées symétriquement de part et d'autre du plan axial de position neutre de l'organe de manœuvre ou colonne de direction, c'est-à-dire de part et d'autre de la came et ses butées associées pour une telle position neutre.

Suivant une réalisation préférée, la came est constituée par un bloc parallélépipédique aux extrémités arrondies et dont l'axe de pivotement passe sensiblement au centre du bloc pour ainsi permettre une action de la came de part et d'autre dudit axe sur les lames élastiques ou les branches du levier, disposées d'un côté et de l'autre de la trajectoire circulaire de la came.

Mais d'autres caractéristiques et avantage de l'invention apparaîtront mieux dans la description détaillée qui suit et se réfère aux dessins annexés, donnés à titre d'exemple et dans lesquels:

La figure 1 est une vue schématique et en bout d'une colonne de direction en position neutre ou de ligne droite d'un véhicule, et à laquelle sont associés des contacts d'interruption du circuit électrique de commande des clignotants du véhicule.

La figure 2 est une vue de dessus de l'ensemble de la figure 1 suivant la flèche II de cette figure.

Les figures 3 et 4 sont des vues identiques aux figures 1 et 2 respectivement, mais montrant la colonne de direction en cours de contre-braquage à gauche.

Les figures 5 et 6 sont des vues identiques aux figures 1 et 2 respectivement, mais montrant la colonne de direction en cours de virage à droite.

Les figures 7 et 8 sont des vues identiques aux figures 1 et 2 respectivement, mais montrant la colonne de direction en cours de retour vers la position neutre ou de ligne droite du véhicule.

La figure 9 est une vue en bout de la colonne de direction à laquelle est associé un levier de commande des clignotants du véhicule.

La figure 10 est une vue de dessus du mode de réalisation de la figure 9, suivant la coupe X–X de cette figure, et

La figure 11 est une vue schématique d'un exemple de réalisation de circuit électrique de commande de clignotants.

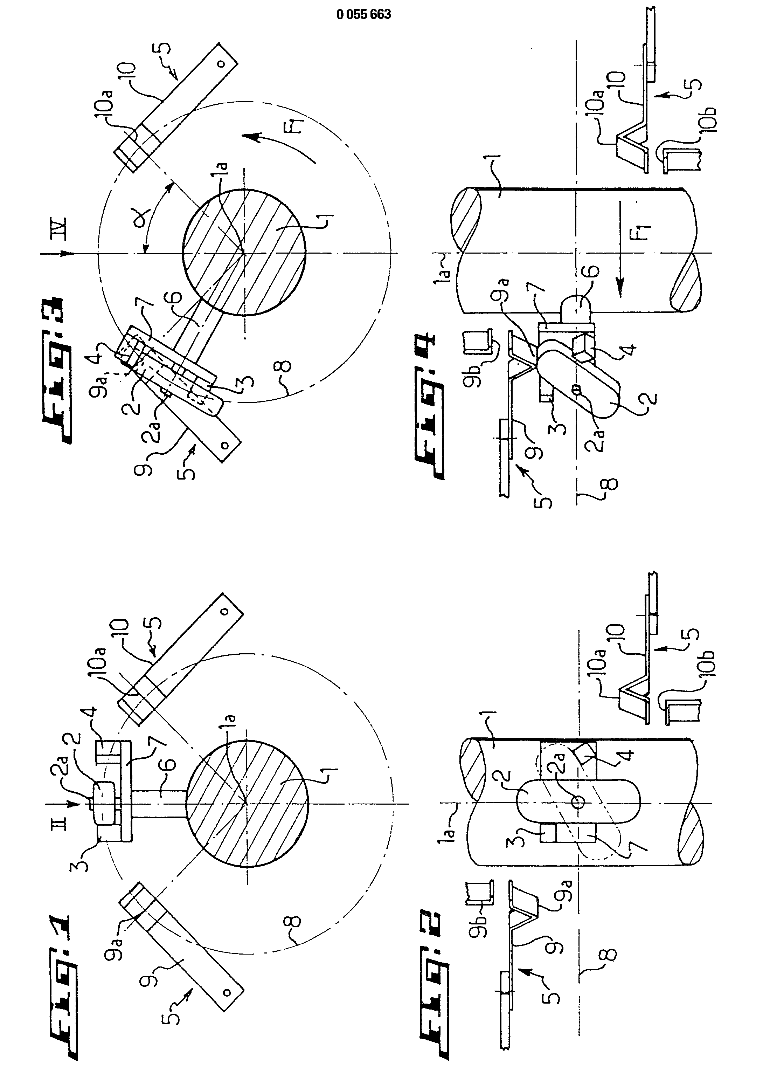

Suivant l'exemple de réalisation illustré par les figures 1 à 8, un dispositif d'interruption automatique conforme à l'invention comprend essentiellement un organe de manœuvre 1 auquel est associée une came 2 montée à rotation libre sur l'organe 1, ainsi que deux butées 3 et 4 susceptibles de limiter la rotation de la came 2 à un angle tel que celle-ci puisse agir positivement ou non sur au moins une pièce 5 apte à interrompre le courant passant dans un circuit électrique, tel que par exemple celui représenté sur la figure 11, en fonction du déplacement dans un sens ou dans l'autre de l'organe de manœuvre 1.

Comme il apparaît clairement sur les figures, la came 2 est montée librement pivotante en bout d'un axe 6 sensiblement perpendiculaire à l'axe 1a de l'organe de manœuvre 1 qui, dans l'exemple représenté, est la colonne de direction d'un véhicule. Il est bien entendu que l'organe de manœuvre 1 pourrait être constitué par tout autre élément susceptible de se déplacer en rotation ou en translation, dans un sens ou dans l'autre, tel que par exemple une tige, une crémaillère ou encore le boîtier relais de transmission de mouvement aux roues du véhicule.

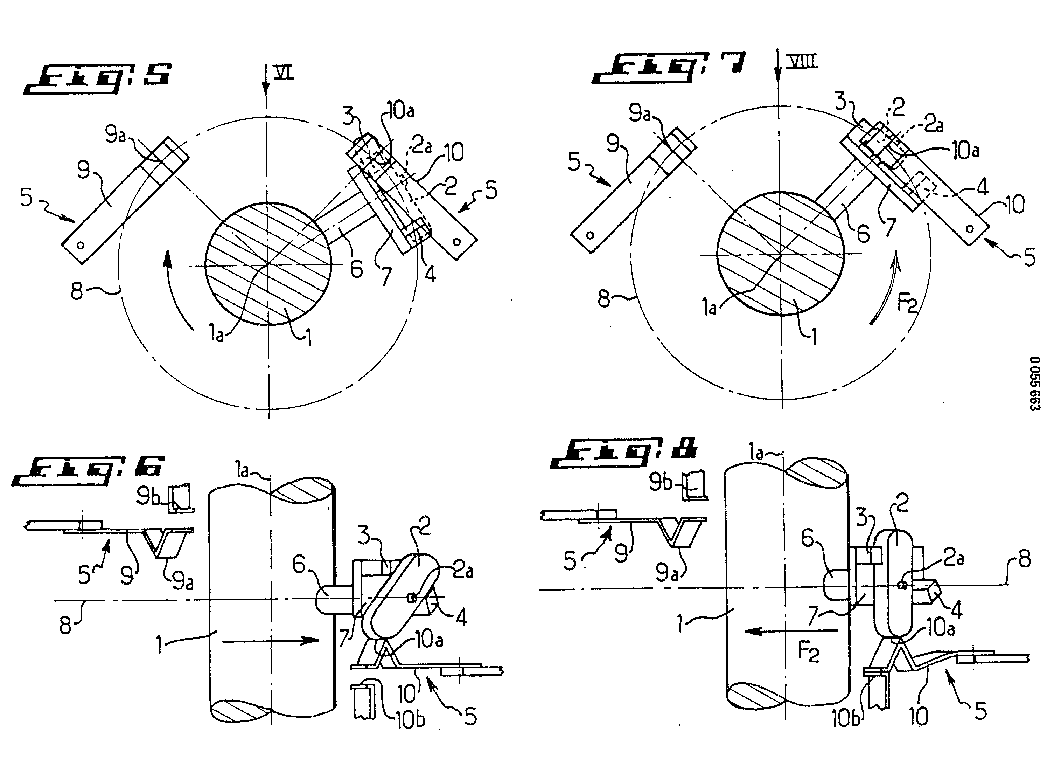

Les butées 3 et 4 sont fixées sur une plaque-support 7 solidaire de l'axe 6. Ces butées sont situées de part et d'autre de l'axe de rotation 2a de la came 2 de façon à limiter la rotation libre de ladite came à un angle inférieur à 90°, comme on le voit notamment sur les figures 2 et 10.

La came 2, suivant l'exemple de réalisation illustré, est constituée par un bloc parallélépipédique dont les extrémités sont arrondies et dont l'axe de pivotement 2a passe sensiblement au centre dudit bloc pour ainsi permettre une action de la came 2 de part et d'autre de l'axe 2a sur les pièces 5.

On comprend ainsi que la came 2 et ses butées associées 3 et 4, sous l'effet de la rotation dans un sens ou dans l'autre de la colonne de direction 1, suivent une trajectoire circulaire 8 bien visible sur les figures et dans laquelle se trouvent les pièces 5.

Suivant le mode de réalisation montré sur les figures 1 à 8, les pièces 5 sont au nombre de deux. Elles sont disposées dans deux plans différents de part et d'autre de la trajectoire circulaire 8 de la came 2 et sont constituées respectivement par une lame élastique 9, 10 avec bossage 9a, 10a susceptible de coopérer ou non avec la came 2 comme on l'expliquera plus loin, une telle coopération positive ou non de la came 2 avec le bossage 9a ou 10a permettant l'interruption ou non du circuit électrique de la figure 11, en fonction du contact ou non du bossage 9a, 10a avec l'alimentation de bord du véhicule, répérée en 9b, 10b sur les figures 2, 4, 6 et 8.

Selon le mode de réalisation illustré par les figures 9 et 10, on voit que, dans la trajectoire de la came 2 et de ses butées associées 3 et 4, est disposée l'une 11 des deux branches 11, 12 d'un levier 13 de mise sous tension d'un circuit électrique non représenté lequel circuit est, suivant un exemple, un circuit de commande des clignotants gauche et droit d'un véhicule. Les branches 11 et 12 sont respectivement articulées en 11a et 12a sur le levier 13 qui peut pivoter dans un sens ou dans l'autre autour de l'axe 13a de façon à assurer la mise sous tension préalable du circuit électrique suivant que le conducteur veuille actionner le clignotant de droite ou de gauche.

Revenant à la figure 1 qui représente l'organe de manœuvre ou colonne de direction 1 en position neutre correspondant à une trajectoire en ligne droite du véhicule, on voit que les lames élastiques 9, 10, de même d'ailleurs que les branches 11 et 12 du levier 13 montré sur la figure 9, sont disposées symétriquement de part et d'autre du plan axial de position neutre de la colonne de direction 1, c'est-à-dire de part et d'autre de la came 2 et ses butées associées 3, 4 pour une telle position neutre.

Pour exposer avec plus de clarté le fonctionnement du dispositif de l'invention qui vient d'être décrit, on donnera brièvement les éléments essentiels constituant le circuit électrique de la figure 11.

Ce circuit est un exemple de circuit de commande de clignotants par impulsions électriques et comprend essentiellement des contacts 15, 16 sur lesquels agit le conducteur pour indiquer un changement de direction vers la droite ou vers la gauche. Ainsi, l'impulsion de commande du clignotant droit ou gauche parvient par la ligne 15D ou 16G respectivement à un circuit logique 17 de maintien du fonctionnement du clignotant considéré. On a montré schématiquement en 18 une centrale clignotante raccordée d'une part au circuit logique 17 par les lignes 17D et 17G de commande du clignotant droit et gauche respectivement, et d'autre part aux circuits de commande des lampes clignotantes arrière-droite, avant-droite, arrière-gauche, et avant-gauche, repérées respectivement ARD, AVD, ARG et AVG. Enfin, on a montré en 18D et 18G des lignes aboutissant au circuit logique 17 et assurant respectivement le passage des impulsion d'arrêt du clignotant droit et gauche. Ces lignes sont reliées aux contacts 9 et 10 décrits précédemment et coopérant avec le dispositif de l'invention qui sera décrit ci-après en se référant tout particulièrement aux figures 1 à 8. On partira de la positon relative colonne de direction 1– lames élastiques 9, 10 représentée sur la figure 1 dans laquelle la colonne de direction 1 est en position neutre, c'est-à-dire dans laquelle le véhicule suit une trajectoire sensiblement rectiligne.

On supposera que le conducteur du véhicule veuille effectuer un virage vers la droite et qu'il aura par conséquent préalablement mis le circuit de la figure 11 sous tension en agissant sur le contact 15 afin qu'une impulsion électrique intervienne sur le circuit logique 17 de maintien du fonctionnement du clignotant droit et sur la centrale 18 pour en commander la mise en marche.

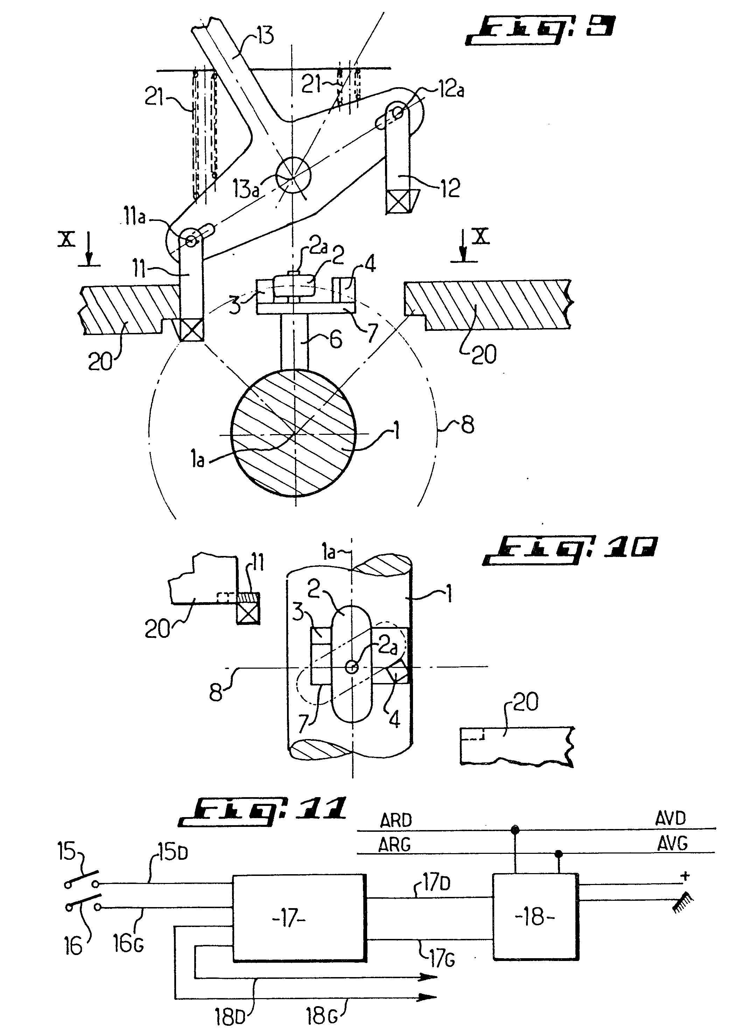

Si la trajectoire du véhicule est très sinueuse ou bien si, comme expliqué au début de cette description, le conducteur, avant de tourner à droite, veut exécuter un contre-braquage à gauche avant de négocier le virage, il imprimera à la colonne de direction 1 une rotation vers la gauche, comme matérialisé par la flèche $F_1$ sur les figures 3 et 4. Lors de ce contre-braquage à gauche, la came 2 au passage sous la lame 9 correspondant au clignotant gauche s'escamotera au contact du bossage 9a. Ce contre-braquage peut s'effectuer suivant un angle de 360° α par rapport à la position neutre, ce qui représente un angle très important par rapport aux dispositifs antérieurs dans lesquels, comme on l'a expliqué précédemment, un petit coup de volant à gauche suffisait pour interrompre le fontionnement du clignotant. On ajoutera ici que sur les desssins, la lame élastique 9 correspond au clignotant gauche, tandis que la lame élastique 10 correspond au clignotant droit.

Ayant ainsi effectué son contre-braquage sans affecter la marche du clignotant droit, le conducteur va maintenant effectuer son virage à droite, comme cela est représenté sur les figures 5 et 6. En d'autres termes, si on suppose que, lors du contre-braquage, la came 2 est passée au-delà du bossage 9a ce qui peut se produire dans le cas d'un contre-braquage important, la came 2, au retour de la colonne de direction 1 entrera à nouveau en contact avec le bossage 9a qui agira positivement sur ledit bossage puisque la came 2 sera bloquée par la butée 3. Ainsi le bossage 9a entrera en contact avec l'élément 9b mais cela n'a aucune importance que l'on interrompe ainsi le clignotant gauche puisque celui-ci n'est pas excité conformément à notre hypothèse de départ. Ensuite, la came 2, comme on le voit sur la figure 6 s'escamotera en passant au-dessus du bossage 10a de la lame élastique 10 correspondant au clignotant droit. De la sorte, celui-ci ne sera pas coupé lors du virage à droite effectué par le conducteur. Et on comprend que ce virage à droite peut être très important et correspondre à plusieurs tours de la colonne de direction 1 sans aucune influence sur le clignotant droit.

Lorsque maintenant le conducteur veut remettre son véhicule en ligne droite, il tournera son volant et donc la colonne de direction 1 vers la gauche, comme matérialisé par les flèches $F_2$ sur les figures 7 et 8. Ainsi, lors de la première rencontre de la came 2 avec le bossage 10a de la lame 10, la came 2 va se redresser en prenant appui sur la butée 3, comme on le voit sur la figure 8, et la partie inférieure de ladite came va faire fléchir le bossage 10a qui entrera en contact avec l'élément 10b pour ainsi interrompre l'alimentation du clignotant droit. Plus précisément, le contact entre le bossage 10a et l'élément 10b permet de désamorcer, sur le circuit clignotant droit de la figure 11, le fonctionnement de la centrale 18 des clignotants.

Il est bien évident que les opérations ci-dessus pour un conducteur désirant effectuer un virage à gauche précédé d'un contre-braquage à droite seraient les mêmes que ci-dessus mais inversées.

A propos du mode de réalisation des figures 9 et 10, on notera que le fonctionnement est le même que celui décrit à propos du mode de réalisation des figures 1 à 8, à cela près que la came 2 commande ou non les branches 11, 12 du levier 13, lesquelles branches peuvent s'accrocher temporairement dans un élément fixe 20 et peuvent être rappelées par des ressorts 21. Le levier commande des contacts non représentés et reliés à un circuit électrique de commande de clignotants, qui n'est également pas représenté ici.

On insistera ici sur le fait que l'angle possible de contre-braquage avant interruption inopinée de l'alimentation électrique du clignotant est très grand vis-à-vis de l'angle souhaité petit pour obtenir l'interruption automatique du clignotant après une action en virage de faible envergure. Or, ce n'était absolument pas le cas des systèmes connus jusqu'à présent qui étaient basés généralement sur un principe de rappel par friction sur la colonne de direction, et qui interrompaient nécessairement le fonctionnement du clignotant pour une très petite action de contre-braquage, ce qui était très désavantageux sur le plan de la sécurité. Enfin, on ajoutera que le dispositif de l'invention appliqué au principe de commande par impulsions électriques comme schématisé sur la figure 11, permet de dissocier complètement l'implantation des systèmes de mise en route des clignotants de ceux nécessaires à leur interruption.

On a donc réalisé suivant l'invention un dispositif d'interruption automatique et sélective qui résoud un problème bien particulier en proposant une solution mécanique simple qui n'avait jamais été imaginée auparavant.

Bien entendu, l'invention n'est nullement limitée aux modes de réalisation décrits et illustrés qui n'ont été donnés qu'à titre d'exemple.

C'est ainsi qu'au lieu d'appliquer le système de l'invention à la rotation d'une colonne de direction, on pourrait parfaitement l'appliquer au déplacement linéaire d'une crémaillère de direction, ou encore d'une manière générale à tout organe de manœuvre convenable, sans pour cela sortir du cadre de l'invention.

## Revendications

1. Dispositif de contrôle automatique et sélectif d'un circuit électrique, comprenant un organe de manœuvre (1) pouvant entraîner dans un sens ou dans l'autre un élément (2) susceptible de commander au moins une pièce (5) apte à interrompre ou rétablir le courant passant dans ledit circuit, caractérisé en ce que ledit élément est constitué par une came allongée (2) montée à rotation libre en bout (2a) d'un axe (6) directement fixé sur l'organe de manœuvre (1) et formant un support (7) pour deux butées fixes (3, 4) disposées de part et d'autre de ladite came pour en limiter la course de rotation à un angle inférieur à 90°, cette came (2) pouvant agir positivement ou non sur deux pièces (5) aptes à interrompre ou rétablir le courant et situées de chaque côté de la came (2) sur sa trajectoire circulaire (8) dans deux plans différents de part et d'autre de cette trajectoire.

2. Dispositif selon la revendication 1, caractérisé en ce que l'axe (6) portant la came (2) pouvant agir sur les pièces (5) est sensiblement perpendiculaire à l'axe (1a) de l'organe de manœuvre (1).

3. Dispositif selon la revendication 1 ou 2, caractérisé en ce que chaque pièce (5) est constituée par un jeu de lames élastiques (9, 10) avec bossages (9a, 10a).

4. Dispositif selon la revendication 1 ou 2, caractérisé en ce que chaque pièce précitée est constituée par un élément fixe (20) sur lequel peut s'accrocher l'une des deux branches (11, 12) d'un levier (13) de mise sous tension du circuit électrique.

5. Dispositif selon l'une des revendications 1 à 4, caractérisé en ce que l'organe de manœuvre précité (1) est la colonne de direction d'un véhicule, tandis que les lames élastiques (9, 10) ou le levier (13) précités sont associés à un circuit de commande des clignotants de ce véhicule.

6. Dispositif selon l'une des revendications précédentes, caractérisé en ce que les lames (9, 10) ou les deux branches (11, 12) du levier (13) sont disposées symétriquement de part et d'autre du plan axial de position neutre de l'organe de manœuvre ou colonne de direction (1), c'est-à-dire de part et d'autre de la came (2) et ses butées associées (3, 4) pour une telle position neutre.

7. Dispositif selon l'une des revendications précédentes, caractérisé en ce que la came précitée (2) est constituée par un bloc parallélépipédique aux extrémités arrondies et dont l'axe de pivotement (2a) passe sensiblement au centre du bloc, pour ainsi permettre une action de la came de part et d'autre dudit axe sur les lames élastiques (9, 10) ou sur les branches du levier (13), disposées d'un côté et de l'autre de la trajectoire circulaire (8).

## Patentansprüche

1. Vorrichtung zur selbsttätigen und wahlweisen Steuerung einer elektrischen Schaltung, mit einem Betätigungsglied (1), das ein Element (2) in die eine oder in die andere Richtung antreiben kann, welches wenigstens ein Teil (5), das fähig ist, den die besagte Schaltung durchfliessenden Strom zu unterbrechen bzw. wieder herzustellen, zu steuern, dadurch gekennzeichnet, dass das besagte Element aus einem länglichen, frei drehbar am Ende (2a) eines unmittelbar am Betätigungsglied (1) befestigten und eine Halterung (7) für zwei ortsfeste Anschläge (3, 4) bildenden Zapfens (6) angeordneten, Nocken (2) besteht, wobei die Anschläge beiderseits des besagten Nockens angeordnet sind, um dessen Drehweg auf einen Winkel unter 90° zu beschränken, wobei dieser Nocken (2) in positiver oder nicht positiver Weise auf zwei Teile (5) einwirken kann, welche fähig sind, den Strom zu unterbrechen bzw. wieder herzustellen und auf jeder Seite des Nockens (2) auf seiner Kreisbahn (8) in zwei verschiedenen Ebenen beiderseits dieser Laufbahn liegen.

2. Vorrichtung nach Anspruch 1, dadurch gekennzeichnet, dass der, den auf die Teile (5) einwirkungsfähigen Nocken (2) tragenden, Zapfen (6) im wesentlichen senkrecht zur Achse (1a) des Betätigungsgliedes (1) steht.

3. Vorrichtung nach Anspruch 1 oder 2, dadurch gekennzeichnet, dass jedes Teil (5) aus einem Satz federnder Streifen (9, 10) mit Höckern (9a, 10a) besteht.

4. Vorrichtung nach Anspruch 1 oder 2, dadurch gekennzeichnet, dass jedes vorgenannte Teil durch ein feststehendes Element (20) gebildet ist, an welchem einer der beiden Schenkel (11, 12) eines Hebels (13), um die elektrische Schaltung unter Spannung zu setzen, anhängbar ist.

5. Vorrichtung nach einem der Ansprüche 1 bis 4, dadurch gekennzeichnet, dass das vorgenannte Betätigungsglied (1) die Lenksäule eines Fahrzeuges ist, während die vorgenannten federnden Streifen (9, 10) bzw. der vorgenannte Hebel (13) einer Schaltung zur Steuerung der Blinkleuchten dieses Fahrzeugs zugeordnet sind bzw. ist.

6. Vorrichtung nach einem der vorangehenden Ansprüche, dadurch gekennzeichnet, dass die Streifen (9, 10) oder die Schenkel (11, 12) des Hebels (13) spiegelbildartig beiderseits der achsialen Ebene der neutralen Stellung des Betätigungsgliedes bzw. der Lenksäule (1) und zwar beiderseits des Nockens (2) und dessen zugeordneten Anschlägen (3, 4) für eine derartige neutrale Stellung angeordnet sind.

7. Vorrichtung nach einem der vorangehenden Ansprüche, dadurch gekennzeichnet, dass der vorgenannte Nocken (2) durch einen spatförmigen Block mit abgerundeten Enden gebildet ist, dessen Schwenkachse (2a) im wesentlichen durch die Mitte des Blocks verläuft, um somit eine Wirkung des Nockens beiderseits der besagten Achse auf die federnden Streifen (9, 10) oder auf die Schenkel des Hebels (13), die auf der einen und auf der anderen Seite der Kreisbahn (8) liegen, zu ermöglichen.

## Claims

1. A device for automatic and selective control of an electric circuit, including an actuating member (1) adaptet to drive in one direction or the other an element (2) capable of actuating at least one member (5) apt to interrupt or re-establish the current passing in the said circuit, characterized in that the said element is constituted by an elongated cam (2) mounted and freely rotatable on the end (2a) of a pin (6) secured directly to the actuating member (1) and constituting a support (7) for two stationary stops (3, 4) arranged on either side of the said cam to limit the rotation travel to an angle smaller than 90°, the said cam (2) being adapted to act either positively or not on two members (5) capable of interrupting or re-establishing the current and located on each side of the cam (2) on its circular trajectory (8) in two different planes on either side of the said trajectory.

2. A device according to claim 1, characterized in that the pin (6) carrying the cam (2) adapted to act upon the members (5) is substantially perpendicular to the axis (1a) of the actuating member (1).

3. A device according to claim 1 or 2, characterized in that each member (5) is constituted by a set of resilient blades (9, 10) with bosses (9a, 10a).

4. A device according to claim 1 or 2, characterized in that each aforesaid member is constituted by a stationary element (20) to which one of the two branches (11, 12) of a lever (13) for switching on the electric circuit is adapted to hook up.

5. A device according to one of claims 1 to 4, characterized in that the said actuating member (1) is the steering column of a vehicle, the said resilient blades (9, 10) or lever (13) being associated with a circuit for the control of the vehicle flasher-lamps.

6. A device according to one of the foregoing claims, characterized in that the blades (9, 10) or the two branches (11, 12) of the lever (13) are arranged symmetrically on either side of the axial plane of neutral position of the actuating member or steering column (1), i.e. on either side of the cam (2) and its associated stops (3, 4) for such a neutral position.

7. A device according to one of the foregoing claims, characterized in that the said cam (2) is constituted by a parallelepepedic block having rounded ends and whose axis of rotation (2a) passes substantially through the center of the said block, to thus allow an action of the cam on either side of the said axis upon the resilient blades (9, 10) or upon the branches of the lever (13) arranged on both sides of the circular trajectory (8).

Fig.1

Fig.2

Fig.3

Fig.4

7

Fig. 7

Fig. 5

Fig. 8

Fig. 6

0 055 663

**Fig. 9**

**Fig. 10**

**Fig. 11**

ARD  AVD
ARG  AVG

-17-
-18-

15  15D
16  16G
17D
17G
18D  18G

11